# EUROPEAN PATENT APPLICATION

(11) **EP 4 468 095 A1**
(43) Date of publication of application: **27.11.2024**
(21) Application number: 23305843.7
(22) Date of filing: 26.05.2023
(51) Int. Cl.: G05B 19/406, B29D 11/00, B24B 13/00, G02B 3/00, G02C 7/02

(54) **METHOD FOR CHECKING A MACHINED OPHTHALMIC DEVICE AND/OR A MACHINED MOLD FOR MAKING AN OPHTHALMIC DEVICE**

(71) Applicant: Essilor International, 94220 Charenton-Le-Pont (FR)
(72) Inventor: GAUTHIER, Ronald, 94100 SAINT MAUR DES FOSSES (FR); BESSONNET, Stephane, 94000 VILLIERS-SUR-MARNE (FR)
(74) Representative: Santarelli

(57) **Abstract**

The disclosure relates to a method for checking (100) a machined ophthalmic device and/or a machined mold for making an ophthalmic device obtained thanks to a machining system, comprising:
- obtaining (101) initial data from the machined ophthalmic device and/or the machined mold, measured in a first predetermined referential, the data obtained being representative of a determined reproductible defect generated on the machined ophthalmic device and/or on the machined mold;
- determining (102) a second referential depending on the determined reproductible defect;
- manipulating (103) the initial data from the first predetermined referential to the determined second referential in order to obtain transformed data;
- deducing (104) from the transformed data a defect value representative of the determined reproductible defect and generated on the machined ophthalmic device and/or on the machined mold.

## Description

### FIELD OF THE DISCLOSURE

The disclosure relates to a method for checking a machined ophthalmic device and/or a machined mold for making an ophthalmic device obtained thanks to a machining system.

The disclosure also relates to a method for manufacturing an ophthalmic device, comprising checking, thanks to a checking device, a machined ophthalmic device and/or a machined mold for making an ophthalmic device obtained thanks to a machining system.

The disclosure further relates to a command and control unit including system elements configured to run a computer program in order to implement at least some steps of any one of these methods.

The disclosure also relates to a manufacturing system configured for carrying out at least some steps of any one of these methods, and a computer program including instructions configured to implement at least some steps of any one of these methods, when said computer program is run by a computer.

The disclosure further relates to a client-server communication interface for transferring to a remote computer at least some data which is determined by a computer program that implements at least some steps of any one of these methods, when said computer program is run in a command and control unit, the remote computer implementing the other steps any one of these methods.

### BACKGROUND ART

During or after manufacturing for instance by machining of optical articles, such as ophthalmic lenses, it is known to check machined surfaces with a control device such as lens mappers.

As explained in European patent EP 3 180 664, a lens mapper can be used for measuring optical and/or geometrical data on the machined optical article.

The lens mapper can provide optical data and may be configured to provide as results values in diopter of overall optical power defects generated on the machined article.

The lens mapper may be configured to graphically provide measured optical data representative of local optical power errors on the machined article.

The local optical power errors may correspond to peaks and valleys in a two-dimensional graphical representation, and the optical data and in particular the values in diopter of the overall optical power defects may be determined from graphics values corresponding to opposite ends of peaks and valleys at a center of the machined article.

In addition, the lens mapper may be configured to graphically provide measured optical data representative of gradient of optical power of the machined article from which it is possible to deduce a shape defect value of a machining tool used for machining the optical article.

The gradient of optical power may correspond to rings in a two-dimensional graphical representation showing in top view the machined article.

Therefore, then lens mapper is theoretically able to provide data which can be analysed to try to link for instance a gradient of optical power to a root cause from the machining tool.

However, graphics provided by the lens mapper, either showing peaks and valleys or showing rings, may depend of the geometrical characteristics of the machined article.

In other words, similar defects caused by the machining tool might not be represented identically depending on the geometrical characteristics of the machined article, causing optionally difficulties for the interpretation of the data provided by the lens mapper.

### SUMMARY OF THE DISCLOSURE

The disclosure is directed to a method for manufacturing an ophthalmic device, carrying out a checking step on the type disclosed above, which is easy and convenient to implement.

The disclosure accordingly provides, according to a first aspect, a method for checking a machined ophthalmic device and/or a machined mold for making an ophthalmic device obtained thanks to a machining system, comprising:
- a step of obtaining initial data from the machined ophthalmic device and/or the machined mold, measured in a first predetermined referential, the data obtained being representative of a determined reproducible defect generated on the machined ophthalmic device and/or on the machined mold;
- a step of determining a second referential depending on the determined reproducible defect;
- a step of manipulating the initial data from the first predetermined referential to the determined second referential in order to obtain transformed data;
- a step of deducing from the transformed data a defect value representative of the determined reproducible defect and generated on the machined ophthalmic device and/or on the machined mold.

According to the disclosure, the initial data coming for instance from measurements operated by a "standard" checking device, can be transformed in a referential defined as a function of the determined reproducible defect of interest, in order to deduce the defect value due to this determined reproducible defect when the ophthalmic device is machined.

Thanks to the disclosure, the defect values due to the determined reproducible defect of interest are more constantly represented in the second referential dedicated to this determined reproducible defect.

In other words, the transformed data from which the defect value is deduced are not or less affected by the plurality of geometrical characteristics of ophthalmic devices which can be machined.

In contrast, the transformed data are better linked to the determined reproducible defect, rendering easier the deducing of the defect value and then the cause of the defect.

Advantageous and convenient features of the manufacturing method are described below.

The defect value may correspond to an optical power value.

The determined reproductible defect may be a machining tool wear defect and/or a blocking tool deformation defect.

The first predetermined referential may be a cartesian referential and the determined second referential may be a polar referential.

The cartesian referential may comprise intial coordonates corresponding to geometrical characteristics of the machined ophthalmic device and/or the machined mold, the initial data being represented by vectors defined by said geometrical characteristics and a determined angle, while in the polar referential, the transformed data may be represented by vectors defined by the determined angle and a defect value, such as a machining tool angle and/or a blocking flexion moment and/or a glue thickness.

The step of checking can be made with a lens mapper configured to graphically provide the initial data representative of local optical power errors in the first predetermined referential.

The local optical power errors may be shown on a first graphic having predetermined sizes and the method may further comprises a step of interpolating and/or extrapolating the initial data in order to graphically provide the transformed data in the determined second referential shown on a second graphic.

The disclosure also provides, according to a second aspect, a method for manufacturing an ophthalmic device, comprising a step of checking, thanks to a checking device, a machined ophthalmic device and/or a machined mold for making an ophthalmic device obtained thanks to a machining system, the step of checking being carried out as disclosed above.

The method may comprise a step of measuring the machined ophthalmic device and/or the machined mold and determining, from measurements, initial data expressed in a first predetermined referential and representative of the determined reproductible defect generated on the machined ophthalmic device and/or on the machined mold.

The method may comprise a step of comparing initial data obtained from the machined ophthalmic device and/or the machined mold, measured in a first predetermined referential, the data obtained being representative of a determined reproductible defect generated on the machined ophthalmic device and/or on the machined mold, to stored parameters including second referentials, transformed data and corresponding deduced defect values obtained during previous checking and in relation with corresponding initial data in first predetermined referentials and determined reproductible defects; and a step of deducing a defect value representative of the determined reproductible defect and generated on the machined ophthalmic device and/or on the machined mold.

The method may comprise, before checking:
- a step of providing an optical function of the ophthalmic device to be obtained;
- a step of providing operational parameters for machining the ophthalmic device and/or a mold for making the ophthalmic device, depending on both the machining system and the optical function of the ophthalmic device to be obtained;
- a step of machining the ophthalmic device and/or the mold for making the ophthalmic device, by carrying out the operational parameters in the machining system.

The disclosure also provides, according to a third aspect, a command and control unit including system elements configured to run a computer program in order to implement at least the following steps :
- obtaining initial data from the machined ophthalmic device and/or the machined mold, measured in a first predetermined referential, the data obtained being representative of a determined reproductible defect generated on the machined ophthalmic device and/or on the machined mold;
- determining a second referential depending on the determined reproductible defect;
- manipulating the initial data from the first predetermined referential to the determined second referential in order to obtain transformed data;
- deducing from the transformed data a defect value representative of the determined reproductible defect and generated on the machined ophthalmic device and/or on the machined mold.

The disclosure also provides, according to a fourth aspect, a manufacturing system comprising a machining tool for machining the ophthalmic device and/or a mold for making an ophthalmic device, a blocking tool for blocking the ophthalmic device and/or the mold during machining and a command and control unit, the system being configured for carrying out at least the following steps:
- obtaining initial data from the machined ophthalmic device and/or the machined mold, measured in a first predetermined referential, the data obtained being representative of a determined reproductible defect generated on the machined ophthalmic device and/or on the machined mold;
- determining a second referential depending on the determined reproductible defect;
- manipulating the initial data from the first predetermined referential to the determined second referential in order to obtain transformed data;
- deducing from the transformed data a defect value representative of the determined reproductible defect and generated on the machined ophthalmic device and/or on the machined mold.

The disclosure also provides, according to a fifth aspect, a computer program including instructions configured to implement at least the following steps:
- obtaining initial data from the machined ophthalmic device and/or the machined mold, measured in a first predetermined referential, the data obtained being representative of a determined reproductible defect generated on the machined ophthalmic device and/or on the machined mold;
- determining a second referential depending on the determined reproductible defect;
- manipulating the initial data from the first predetermined referential to the determined second referential in order to obtain transformed data;
- deducing from the transformed data a defect value representative of the determined reproductible defect and generated on the machined ophthalmic device and/or on the machined mold;
when said computer program is run by a computer.

The disclosure also provides, according to a sixth aspect, a client-server communication interface to be used for carrying out a method a method for checking a machined ophthalmic device and/or a machined mold for making an ophthalmic device obtained thanks to a machining system, comprising:
- obtaining initial data from the machined ophthalmic device and/or the machined mold, measured in a first predetermined referential, the data obtained being representative of a determined reproductible defect generated on the machined ophthalmic device and/or on the machined mold;
- determining a second referential depending on the determined reproductible defect;
- manipulating the initial data from the first predetermined referential to the determined second referential in order to obtain transformed data;
- deducing from the transformed data a defect value representative of the determined reproductible defect and generated on the machined ophthalmic device and/or on the machined mold;
the client-server communication interface being configured for transferring to a remote computer at least some data, such as the initial data and/or the transformed, which is determined by a computer program that implements at least some steps of the method, when said computer program is run in a command and control unit, the remote computer implementing the other steps the method.

### BRIEF DESCRIPTION OF THE DRAWINGS

The description of the disclosure now continues with a detailed description of advantageous embodiments given hereinafter by way of nonlimiting example and with reference to the appended drawings.
Figure 1 schematically depicts a manufacturing system such as a digital surfacing machine, configured to carry out steps of a method for manufacturing an ophthalmic device, according to the disclosure.
Figure 2 diagrammatically shows a client-server communication interface comprising system parts configured for transferring at least one configuration parameter determined by the method according to the disclosure to a remote data processing system.
Figure 3 is a block diagram illustrating operating steps of a method for checking a machined ophthalmic device and/or a machined mold for making an ophthalmic device obtained thanks to the digital surfacing machine and/or to the client-server communication interface illustrated in Figures 1 and 2.
Figure 4 is a block diagram illustrating operating steps of the method for manufacturing an ophthalmic device according to the disclosure and thanks to the digital surfacing machine and/or to the client-server communication interface illustrated in Figures 1 and 2.
Figure 5 illustrates schematically a measuring of the machined ophthalmic device and/or a machined mold thanks to a lens mapper.
Figure 6 shows a two-dimensional graphical representation of initial data in the form of a gradient of optical power.
Figure 7 shows a two-dimensional graphical representation of transformed data in the form of a gradient of optical power.
Figure 8 illustrates graphics showing the passage from figures 6 to 7 by an interpolating and/or extrapolating step.
Figure 9 shows similar two-dimensional graphical representations than in Figures 6 and 7, according to different defect values.

### DETAILED DESCRIPTION OF EXAMPLE EMBODIMENTS

The disclosure is directed to a method for manufacturing an ophthalmic device comprising a machining step, and a method for checking a machined ophthalmic device and/or a machined mold for making the ophthalmic device.

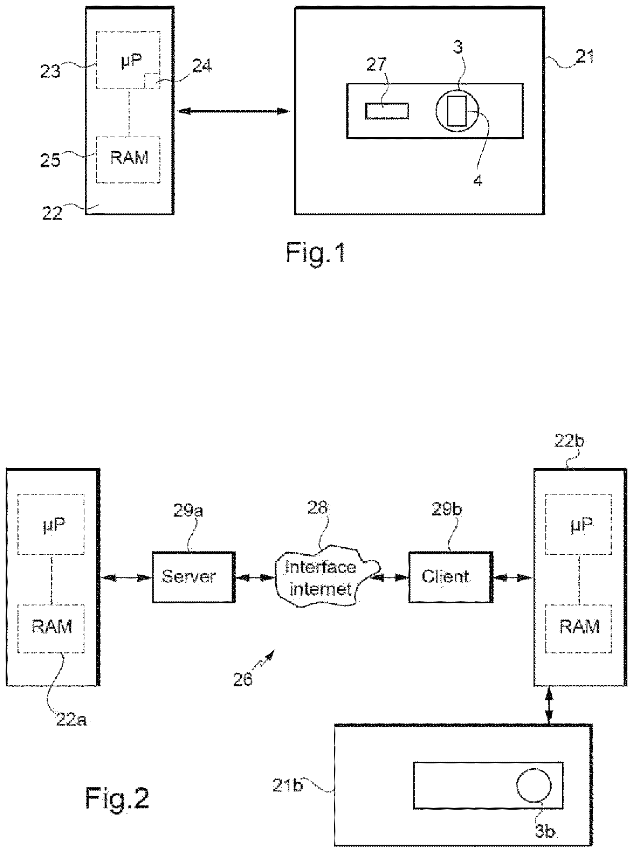

Figure 1 illustrates a manufacturing system configured to carry out machining steps of an ophthalmic surface corresponding for instance to a predetermined optical function of an ophthalmic device made from a substrate 3 which is temporarily and fixedly maintained by a blocking device 4 during the machining.

The system may comprises a manufacturing machine 21 and system parts generally formed by at least one command and control unit 22 configured to communicate with a data processing system (or control unit) of the machine 21 and configured to run a computer program having instructions configured to implement at least the machining step of the method, when said computer program is run by a computer.

The machine 21 is here a numerical-control "free-form" turning machine 1, numerical control denoting the set of equipment and software, the function of which is to give movement instructions to all the elements of the machine 1.

The machine 21 comprises a machining tool 27, for instance a moveable machining arm on which is mounted a cutting tool provided with a cutting edged, and a data processing system or a control unit (not shown) configured for controlling the tool 27.

The command and control unit 22 comprises a microprocessor 23 having a memory 24, in particular a non-volatile memory, allowing it to load and store the computer program, also called software, which when it is executed in the microprocessor 23, allows the implementation of method according to the disclosure.

This non-volatile memory 24 is for example of the ROM ("read only memory") type.

The command and control unit 22 further comprises a memory 25, in particular a volatile memory, allowing data to be stored during the execution of the software and the implementation of the method.

This volatile memory 25 is for example of the RAM or EEPROM type (respectively "random access memory" and "electrically erasable programmable read only memory").

The command and control unit may be only at least partially integrated into the machine. In other words, the control unit may be arranged in part, or in whole, outside the machine.

The command and control unit can form at least partially a part of the machine and may comprise one or a plurality of command and control modules located inside and/or outside the machine.

The machine 21 is here configured for roughing and next finishing the face(s) in order to form the ophthalmic lens.

Therefore, the machining tool 27 is a roughing tool if roughing or a finishing tool if finishing.

The machine 21 can also be configured for polishing the faces and/or for edging the peripheral edge in order to form the ophthalmic lens. The tool is also adapted to the polishing and/or edging.

The command and control unit 22 is configured to command and control at least some of the steps of the manufacturing method described below.

In variant, the substrate is not the ophthalmic device as such but rather a mold part which is then used for manufacturing the ophthalmic device.

Figure 2 shows a client-server communication interface 26 comprising for instance a so-called supplier side 29a and another, so-called client side 29b, and these two sides communicating via an internet interface 28.

The supplier side comprises a server 29a linked to a data processing system or a command and control unit 22a of the same type as that in Figure 1, this server 29a being configured to communicate with the internet interface 28.

The client side 29b is configured to communicate with the internet interface 28, and is linked to a data processing system or a command and control unit 22b of the same type as that of the supplier side.

Further, the command and control unit 22b on the client-side is linked to a manufacturing machine 21b of the same type as that in Figure 1 for manufacturing at least the first face 3b of an ophthalmic substrate.

For instance, the command and control unit 22b on the client-side is configured for receiving by a user some parameters about the ophthalmic device to be machined and about the manufacturing method intended to be implemented for machining the ophthalmic device.

For instance, the parameters about the ophthalmic device may include geometrical characteristics and/or optical function of an ophthalmic surface intended to be manufactured and/or at least one information representative of intrinsic parameter of a material of the ophthalmic device.

For instance, the parameters about the manufacturing method includes information representative of machining steps and in particular regarding the machining tool 27, such as wear parameters of a cutting edge of the machining tool 27 and/or of the blocking device 4, such as a blocking force applied for instance by a clamping device or a vacuum device or only the type of clamping device and/or vacuum device.

To be noted that the wear parameters can be defined by at least one of at least a distance travelled by the cutting edge for machining the predetermined surface, a friction time between the cutting edge and the part which is machined, a cutting depth, feed rate and/or rotation speed for machining the predetermined surface, and also material properties of the part to be machined.

To be noted also that the wear parameter can be representative for instance of the angular position of the machining tool 27 corresponding to an angle of the cutting edge used along the tool path, also called tool contact angle.

The command and control unit 22b on the client-side, using the internet 28 and server 29a interface, sends the data received to the command and control unit 22a on the supplier-side for the determination of the manufacturing file and operational parameters.

The command and control unit 22a on the supplier-side executes the computer program that it contains in order to determine a defect value representative of the determined reproducible defect and generated on the machined ophthalmic device and/or on the machined mold.

Using the server 29a and the internet interface 28, the command and control unit 22a on the supplier-side sends the manufacturing file and operational parameters.

The command and control unit 22b on the client side is here configured to execute software for implementing the other steps of the method for manufacturing by machining the ophthalmic device using the manufacturing file and operational parameters thanks to the manufacturing system 21b.

In variant, a step of determining the defect value can be carried out by the command and control unit 22b on the client side.

In another variant, the manufacturing system can be located on the supplier side so that the command and control unit 22a on the supplier side is further configured to machine the ophthalmic surface.

In another variant, the manufacturing system can only comprise a blocking device on which the blocking force is manually set depending on the machining steps and optionally edging step and/or polishing step.

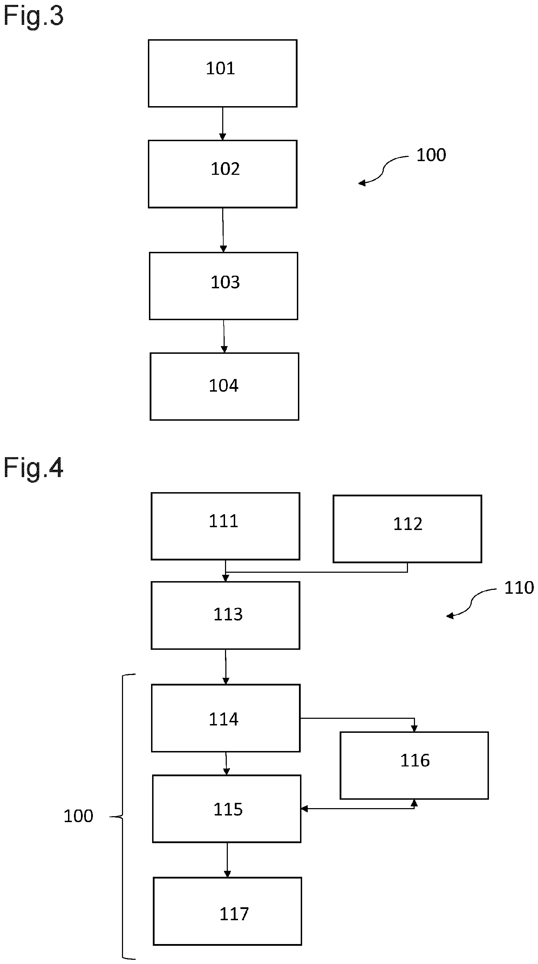

Figure 3 shows steps for checking 100 the machined ophthalmic device and/or the machined mold for making the ophthalmic device, thanks to the digital surfacing machine and/or to the client-server communication interface illustrated in Figures 1 and 2.

The method comprises a step of obtaining 101 initial data from the machined ophthalmic device and/or the machined mold, measured in a first predetermined referential, the data obtained being representative of a determined reproducible defect generated on the machined ophthalmic device and/or on the machined mold.

The determined reproducible defect can be a machining tool wear defect and/or a blocking tool deformation defect, and the first predetermined referential can be a Cartesian referential.

The Cartesian referential may comprise initial coordinates corresponding to geometrical characteristics of the machined ophthalmic device and/or the machined mold, the initial data being represented by vectors defined by said geometrical characteristics and a determined angle.

The method further comprises a step of determining 102 a second referential depending on the determined reproducible defect.

The determined second referential can be a polar referential.

In the polar referential, the transformed data are represented by vectors defined by the determined angle and a defect value, such as a machining tool angle and/or a blocking flexion moment and/or a glue thickness.

The method further comprises a step of manipulating 103 the initial data from the first predetermined referential to the determined second referential in order to obtain transformed data.

The method further comprises a step of deducing 104 from the transformed data a defect value generated on the machined ophthalmic device and/or on the machined mold, due to the determined reproducible defect.

The defect value corresponds to an optical power value.

Figure 4 shows steps for manufacturing 110 the machined ophthalmic device and/or the machined mold for making the ophthalmic device, thanks to the digital surfacing machine and/or to the client-server communication interface illustrated in Figures 1 and 2.

The method comprises a step of providing 111 an optical function of the ophthalmic device to be obtained and a step of providing 112 operational parameters for machining the ophthalmic device and/or a mold for making the ophthalmic device, depending on both the machining system and the optical function of the ophthalmic device to be obtained.

The method further comprises a step of machining 113, by carrying out the operational parameters in the machining system.

The method further comprises a step of checking 100 the machined ophthalmic device and/or the machined mold for making the ophthalmic device.

In particular, the method comprises a step of measuring 114 the machined ophthalmic device and/or the machined mold and determining, from measurements, initial data expressed in the first predetermined referential and representative of the determined reproducible defect generated on the machined ophthalmic device and/or on the machined mold.

The initial data obtained are representative of a determined reproducible defect generated on the machined ophthalmic device and/or on the machined mold.

The method further comprises a step of comparing 115 the initial data obtained from the machined ophthalmic device and/or the machined mold, measured in the first predetermined referential, to a table 116 comprising stored parameters including second referential, transformed data and corresponding deduced defect values obtained during previous checking and in relation with corresponding initial data in first predetermined referential and determined reproducible defects.

In order to complete the table 116, the initial data obtained by measurement in step 114 can be uploaded and stored therein.

The method further comprises a step of deducing 117 a defect value generated on the machined ophthalmic device and/or on the machined mold, due to the determined reproducible defect, similarly to the step 104.

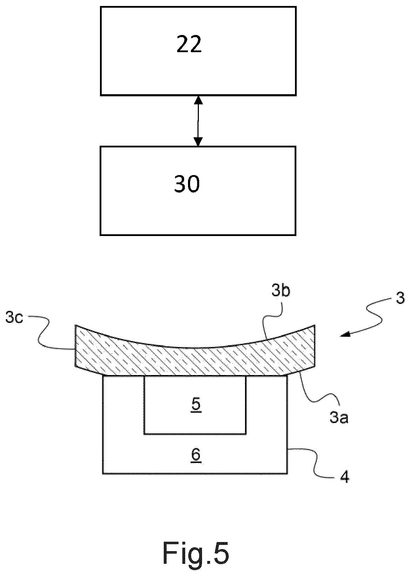

The checking step 100 can be made at least thanks to a lens mapper 30 as shown on Figure 5, the lens mapper being for instance connected to the command and control unit 22.

Such a lens mapper 30 is preferably located in front of the machined substrate 3, the latter being mounted on the blocking device 4.

For instance, the blocking device 4 here comprises a block member 5, also called blocker, which can be made for instance of metal or of plastic. An intermediary part (not shown) can be formed by a protective film and/or an adhesive film and sandwiched between the block member 5 and the machined substrate 3.

In variant, the block member main part can be made by a permanent part made of metal and a non-permanent part made of fuse metal.

The block member 5 is here configured to be connected to a second face 3a of the substrate 3, which is opposite to the first face 3b thereof.

In the present embodiment, the first face 3b is also called a rear face while the second face 3a is also called a front face.

The rear face can be located in regard of an eye of a wearer when the ophthalmic device is worn, while the front face can be located in regard of an object when the ophthalmic device is worn, or inversely.

In variants, the block member 5 can be configured to be connected to an outline portion 3c, or edge, which joins both first face 3b and second face 3a, or both the second face 3a and the outline portion 3c, or the second face 3a, or both the second face 3a and the outline portion 3c.

In another variant, the block member 5 can be configured to be connected successively to the first face 3b and the second face 3a, in combination or not with the outline portion 3c.

The blocking device may further comprise a clamping member 6 which is configured to apply a fix or variable clamping force.

The lens mapper 30 is thus here located in front of the first face 3b and is able to make measures by in reflection and/or transmission so that both first and second faces 3b and 3a impact measurements made by the lens mapper 30 and thus the initial data mentioned above.

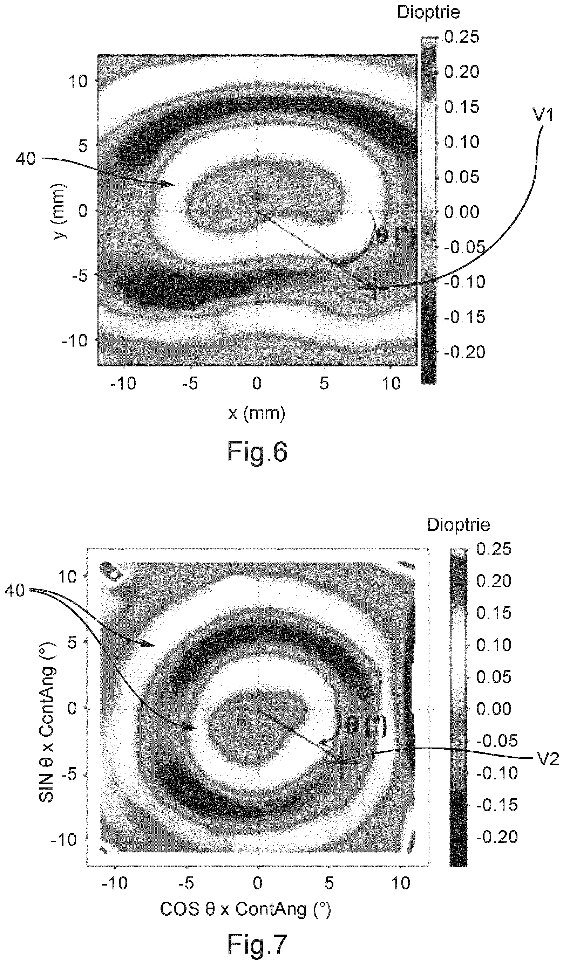

As shown in Figure 6, the lens mapper is configured to graphically provide the initial data representative of local optical power errors in the first predetermined referential.

As explained above, the first predetermined referential can be a Cartesian referential and the Cartesian referential may comprise initial coordinates corresponding to geometrical characteristics (x, y) of the machined ophthalmic device and/or the machined mold, the initial data being represented by vectors V1 defined by said geometrical characteristics and a determined angle θ.

In Figure 6, the lens mapper is configured to graphically provide the initial data in the form of a gradient of optical power, in diopters, and which is illustrated by rings 40 in a two-dimensional graphical representation.

Thanks to the steps 102 and 103 of determining a second referential depending on the determined reproducible defect and of manipulating the initial data from the first predetermined referential to the determined second referential in order to obtain transformed data, it is possible to change the two-dimensional graphical representation shown in Figure 6 into the two-dimensional graphical representation shown in Figure 7, in which the lens mapper is configured to graphically provide the transformed data representative of the local optical power errors in the second predetermined referential.

As explained above, the determined second referential can be a polar referential.

In the polar referential, the transformed data are represented by vectors V2 defined by the determined angle θ and a defect value, such as a machining tool angle and/or a blocking flexion moment and/or a glue thickness.

The geometrical characteristics (x, y) in the first predetermined referential are here replaced by (cosθ*K, sinθ*K) in the second predetermined referential, K corresponding to a defect value parameter.

For instance, the defect value parameter may correspond to the machining tool contact angle if the reproducible defect is due to the machining tool, or the defect value may correspond to the blocking flexion moment and/or the glue thickness is due to the block member.

In Figure 7, the rings 40 are illustrated as being substantially less deformed as in Figure 6.

The rings 40 illustrated in Figure 7 show that, the initial data coming for instance from measurements operated by a "standard" checking device, can be transformed in a referential defined as a function of the determined reproducible defect of interest, in order to deduce the defect value due to this determined reproducible defect when the ophthalmic device is machined.

The defect values due to the determined reproducible defect of interest are more constantly represented in the second referential dedicated to this determined reproducible defect.

In other words, the transformed data from which the defect value is deduced are not or less affected by the plurality of geometrical characteristics of ophthalmic devices which can be machined.

In contrast, the transformed data are better linked to the determined reproducible defect, rendering easier the deducing of the defect value and then the cause of the defect.

The transformation of the initial data in the first referential to the transformed data in the second referential might induce deformation of the design of the two-dimensional graphical representation.

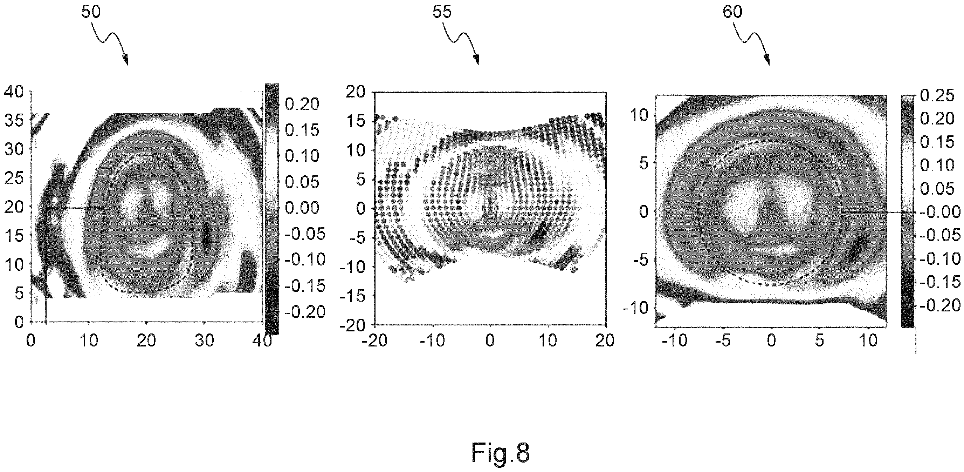

In Figure 8, the local optical power errors are shown on a first graphic having predetermined sizes (left view - equated to Figure 6) and the method may further comprises interpolating and/or extrapolating the initial data (intermediate graphic - central view) in order to graphically provide the transformed data in the determined second referential shown on a second graphic (right view - equated to Figure 7).

To be noted that in Figure 8, the scale and referential of the left view are the same than in Figure 6 (x and y in millimeters), while the scale and referential of the intermediate and right views are the same than in Figure 7 (cosθ*K and sinθ*K in degree).

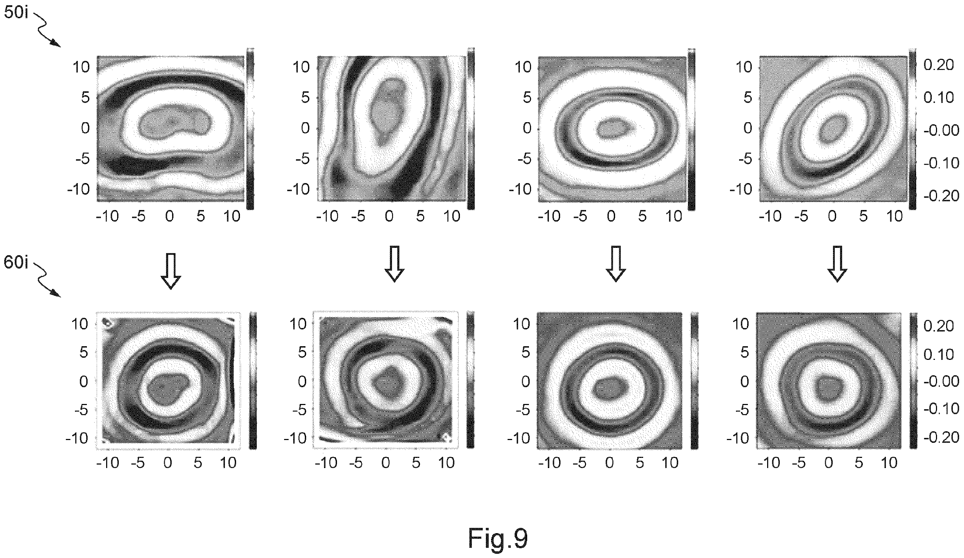

Figure 9 shows similar corresponding first and second graphics 50i and 60i illustrating determined reproductible defects and/or different different defect values.

For instance, for a determined reproductible defects and a defect value, a first graphic 50i corresponds to the two-dimensional graphical representation of the initial data while the second graphic 60i corresponds to the two-dimensional graphical representation of the transformed data.

In Figure 9, the determined reproductible defect is due to the machining tool wear defect and the different shapes of rings are due to different tool contact angles between the machining tool and the machined ophthalmic device and/or a machined mold for making an ophthalmic device.

To be noted that in Figure 9, the scale and referential of the first graphics 50i are the same than in Figure 6 (x and y in millimeters), while the scale and referential of the second graphics 60i are the same than in Figure 7 (cosθ*K and sinθ*K in degree).

It is to be noted that the transformation between initial data and transformed data is not only a translation or a rotation of the data, but preferably a combination of at least one translation and at least one rotation of data.

It should be noted more generally that the disclosure is not limited to the examples described and represented.

## Claims

1. Method for checking (100) a machined ophthalmic device and/or a machined mold for making an ophthalmic device (3) obtained thanks to a machining system (21), comprising:
- obtaining (101) initial data from the machined ophthalmic device and/or the machined mold, measured in a first predetermined referential, the data obtained being representative of a determined reproductible defect generated on the machined ophthalmic device and/or on the machined mold;
- determining (102) a second referential depending on the determined reproductible defect;
- manipulating (103) the initial data from the first predetermined referential to the determined second referential in order to obtain transformed data;
- deducing (104) from the transformed data a defect value representative of the determined reproductible defect and generated on the machined ophthalmic device and/or on the machined mold.

2. Method according to claim 1, wherein the defect value corresponds to an optical power value.

3. Method according to claim 1 or 2, wherein the determined reproductible defect is a machining tool wear defect and/or a blocking tool deformation defect.

4. Method according to any one of claims 1 to 3, wherein the first predetermined referential is a cartesian referential and the determined second referential is a polar referential.

5. Method according to claims 3 and 4, wherein the cartesian referential comprises intial coordonates corresponding to geometrical characteristics of the machined ophthalmic device and/or the machined mold (3), the initial data being represented by vectors defined by said geometrical characteristics and a determined angle, while in the polar referential, the transformed data are represented by vectors defined by the determined angle and a defect value, such as a machining tool angle and/or a blocking flexion moment and/or a glue thickness.

6. Method according to any one of claims 1 to 5, wherein the checking is made with a lens mapper (30) configured to graphically provide the initial data representative of local optical power errors in the first predetermined referential.

7. Method according to claim 6, wherein the local optical power errors are shown on a first graphic (50) having predetermined sizes and the method further comprises interpolating and/or extrapolating the initial data in order to graphically provide the transformed data in the determined second referential shown on a second graphic (60).

8. Method for manufacturing an ophthalmic device, comprising checking (100), thanks to a checking device, a machined ophthalmic device and/or a machined mold for making an ophthalmic device (3) obtained thanks to a machining system (21), according to the method of any one of claims 1 to 7.

9. Method according to claim 8, comprising measuring (114) the machined ophthalmic device and/or the machined mold and determining, from measurements, initial data expressed in a first predetermined referential and representative of the determined reproductible defect generated on the machined ophthalmic device and/or on the machined mold.

10. Method according to claim 8 or 9, comprising comparing (115) initial data obtained from the machined ophthalmic device and/or the machined mold, measured in a first predetermined referential, the data obtained being representative of a determined reproductible defect generated on the machined ophthalmic device and/or on the machined mold, to stored parameters including second referentials, transformed data and corresponding deduced defect values obtained during previous checking and in relation with corresponding initial data in first predetermined referentials and determined reproductible defects; and deducing (117) a defect value representative of the determined reproductible defect and generated on the machined ophthalmic device and/or on the machined mold.

11. Method according to any one of claims 8 to 10, further comprising, before checking (100):
- providing (111) an optical function of the ophthalmic device to be obtained;
- providing (112) operational parameters for machining the ophthalmic device and/or a mold for making the ophthalmic device, depending on both the machining system and the optical function of the ophthalmic device to be obtained;
- machining (113) the ophthalmic device and/or the mold for making the ophthalmic device, by carrying out the operational parameters in the machining system.

12. Command and control unit including system elements configured to run a computer program in order to implement at least the following steps :
- obtaining (101) initial data from the machined ophthalmic device and/or the machined mold, measured in a first predetermined referential, the data obtained being representative of a determined reproductible defect generated on the machined ophthalmic device and/or on the machined mold;
- determining (102) a second referential depending on the determined reproductible defect;
- manipulating (103) the initial data from the first predetermined referential to the determined second referential in order to obtain transformed data;
- deducing (104) from the transformed data a defect value representative of the determined reproductible defect and generated on the machined ophthalmic device and/or on the machined mold.

13. Manufacturing system comprising a machining tool for machining the ophthalmic device and/or a mold for making an ophthalmic device, a blocking tool for blocking the ophthalmic device and/or the mold during machining and a command and control unit, the system being configured for carrying out at least the following steps:
- obtaining (101) initial data from the machined ophthalmic device and/or the machined mold, measured in a first predetermined referential, the data obtained being representative of a determined reproductible defect generated on the machined ophthalmic device and/or on the machined mold;
- determining (102) a second referential depending on the determined reproductible defect;
- manipulating (103) the initial data from the first predetermined referential to the determined second referential in order to obtain transformed data;
- deducing (104) from the transformed data a defect value representative of the determined reproductible defect and generated on the machined ophthalmic device and/or on the machined mold.

14. Computer program including instructions configured to implement at least the following steps:
- obtaining (101) initial data from the machined ophthalmic device and/or the machined mold, measured in a first predetermined referential, the data obtained being representative of a determined reproductible defect generated on the machined ophthalmic device and/or on the machined mold;
- determining (102) a second referential depending on the determined reproductible defect;
- manipulating (103) the initial data from the first predetermined referential to the determined second referential in order to obtain transformed data;
- deducing (104) from the transformed data a defect value representative of the determined reproductible defect and generated on the machined ophthalmic device and/or on the machined mold;
when said computer program is run by a computer.

15. Client-server communication interface to be used for carrying out a method a method for checking (100) a machined ophthalmic device and/or a machined mold for making an ophthalmic device (3) obtained thanks to a machining system (21), comprising:
- obtaining (101) initial data from the machined ophthalmic device and/or the machined mold, measured in a first predetermined referential, the data obtained being representative of a determined reproductible defect generated on the machined ophthalmic device and/or on the machined mold;
- determining (102) a second referential depending on the determined reproductible defect;
- manipulating (103) the initial data from the first predetermined referential to the determined second referential in order to obtain transformed data;
- deducing (104) from the transformed data a defect value representative of the determined reproductible defect and generated on the machined ophthalmic device and/or on the machined mold;
the client-server communication interface being configured for transferring to a remote computer at least some data, such as the initial data and/or the transformed, which is determined by a computer program that implements at least some steps of the method, when said computer program is run in a command and control unit, the remote computer implementing the other steps the method.
